# EUROPEAN PATENT APPLICATION

(11) **EP 4 773 613 A1**
(43) Date of publication of application: **08.07.2026**
(21) Application number: 24858413.8
(22) Date of filing: 21.08.2024
(51) Int. Cl.: H04N 21/218

(54) **MEDIA STREAM TRANSMISSION METHOD AND APPARATUS BASED ON EDGE DEVICE, AND ELECTRONIC DEVICE**

(30) Priority: 30.08.2023 CN 202311110372
(71) Applicant: Shanghai Gewu Zhiyuan Network Technology Co., Ltd., Shanghai 200082 (CN)
(72) Inventor: LI, Yimin, Beijing 100028 (CN); QIAN, Zhenxing, Beijing 100028 (CN); HONG, Xuebo, Beijing 100028 (CN); CHEN, Dong, Beijing 100028 (CN); GUAN, Lixin, Beijing 100028 (CN)
(74) Representative: Isarpatent
(86) International application number: PCT/CN2024/113750
(87) International publication number: WO 2025/044870

(57) **Abstract**

The present invention discloses a method and an apparatus for a media stream transmission based on an edge device, and an electronic device. The method includes: an edge all-in-one machine receives a live streaming request message from a station device management cloud module in a first network, wherein the edge all-in-one machine is located in a second network. The edge all-in-one machine generates media stream service information based on an identifier of a camera module, and sends the media stream service information to the station device management cloud module to cause the station device management cloud module to request to obtain a media stream from a target network video recorder corresponding to the identifier of the camera module based on an edge live streaming address, an Internet protocol (IP) address, and a port. In accordance with a determination that a successful feedback for the request is from the target network video recorder, The edge all-in-one machine receives the media stream recorded by the target network video recorder through the camera module, and transmits the media stream to a client based on the edge live streaming address. The method saves public network bandwidth resources by transmitting media stream data through the second network, i.e. a local area network, thus improving the stability and fluency of video playing.

## Description

This application claims priority to Chinese Patent Application No. 202311110372.5, filed with the China National Intellectual Property Administration on August 30, 2023, titled with "MEDIA STREAM TRANSMISSION METHOD AND APPARATUS BASED ON EDGE DEVICE, AND ELECTRONIC DEVICE", the disclosure of which is incorporated herein by reference in its entirety.

### FIELD

The present invention relates to a field of video transmission, and in particular, to a method and an apparatus for a media stream transmission based on an edge device, and an electronic device.

### BACKGROUND

In a packaging process of goods and packages in a logistics warehouse, a video recorder or vidicon will be used to capture and record operations of an operator on a workbench. After a user receives a package, if the package is broken or has another abnormality, this video recording can be provided as evidence to prove that there is no damage to the goods during packaging or loading and unloading.

To ensure the reliability of video recording, a window for previewing a video in real time will be provided on an operating system of a page of a monitoring end. The window is used by an operator to monitor whether video recording is running normally. When the operator finds an abnormality in a packaging operation device, the operator can promptly repair or replace other recording devices.

Due to the fact that all operational processes during real-time video recording need to be continuously presented in pictures, in an existing solution, the video recorder or vidicon is connected to a public network through a standard protocol. If there is a large number of goods to be packaged, a large number of workstations need to be recorded and play videos simultaneously, which will greatly consume network bandwidth resources in the warehouse. In addition, since the network transmission process of transmission of video media streams will be unstable, which affects the monitoring effect.

### SUMMARY

In view of above, the present invention provides a method and an apparatus for a media stream transmission based on an edge device, and an electronic device, so as to solve the problem of occupation of a large number of network resources caused by transmission and playing of media streams through a public network.

In a first aspect, the present invention provides a method for a media stream transmission based on an edge device, applied to an edge all-in-one machine. The method includes: receiving, by the edge all-in-one machine, a live streaming request message from a station device management (SDM) cloud module in a first network, wherein the live streaming request message includes an identifier of a camera module which is requested for live streaming by a client, and the edge all-in-one machine is located in the second network; generating, by the edge all-in-one machine, media stream service information based on the identifier of the camera module, wherein the media stream service information includes: an edge live streaming address, an Internet protocol (IP) address of the edge all-in-one machine, and a port used for receiving a media stream; sending, by the edge all-in-one machine, the media stream service information to the station device management cloud module to cause the station device management cloud module to request to obtain the media stream from a target network video recorder corresponding to the identifier of the camera module based on the edge live streaming address, the IP address, and the port; and in accordance with a determination that a successful feedback for the request is from the target network video recorder, receiving, by the edge all-in-one machine, the media stream recorded by the target network video recorder through the camera module, and transmitting the media stream to the client based on the edge live streaming address.

The first network is a public network, and the second network is a private network, such as a local area network.

Optionally, the station device management cloud module is an SDM cloud module; and the target network video recorder is a target NVR.

Optionally, the edge live streaming address is a uniform resource locator (URL).

According to the first aspect, in one possible implementation, the edge all-in-one machine includes a station device management edge device and an artificial intelligence Internet of things Video (AIoTVideo) edge device; the receiving, by an edge all-in-one machine, a live streaming request message from a station device management cloud module in a first network includes: receiving, by the station device management edge device, the live streaming request message from the station device management cloud module; and sending, by the station device management edge device, the live streaming request message to the AIoTVideo edge device.

According to the first aspect, in another possible implementation, the generating, by the edge all-in-one machine, media stream service information based on the identifier of the camera module includes: receiving, by the AIoTVideo edge device, the live streaming request message from the station device management edge device; generating, by the AIoTVideo edge device, the media stream service information based on the identifier of the camera module, an IP address of the AIoTVideo edge device, and a video receiving port of the AIoTVideo edge device; and sending, by the AIoTVideo edge device, the media stream service information to the station device management edge device.

According to the first aspect, in still another possible implementation, the sending, by the edge all-in-one machine, the media stream service information to the station device management cloud module includes: receiving, by the station device management edge device, the media stream service information from the AIoTVideo edge device, and forwarding the media stream service information to the station device management cloud module.

According to the first aspect, in yet another possible implementation, the receiving, by the edge all-in-one machine, the media stream recorded by the target network video recorder through a camera module, and transmitting the media stream to the client based on the edge live streaming address includes: receiving, by the AIoTVideo edge device, the media stream from the target network video recorder; and in response to receiving the edge live streaming address from the client, sending, by the AIoTVideo edge device, the media stream to the client.

In a second aspect, the present invention provides a method for a media stream transmission based on an edge device. The method includes: receiving, by a station device management cloud module, a live streaming request message from a client in a second network, wherein the live streaming request message includes an identifier of a camera module which is requested for live streaming, and the station device management cloud module is located in a first network; sending, by the station device management cloud module, the live streaming request message to an edge all-in-one machine of the second network; receiving, by the station device management cloud module, media stream service information which is fed back from the edge all-in-one machine based on the live streaming request message, wherein the media stream service information includes: an edge live streaming address, an IP address of the edge all-in-one machine, and a port used for receiving a media stream; sending, by the station device management cloud module, the media stream service information and the identifier of the camera module to an AIoTVideo cloud module of the first network to cause the AIoTVideo cloud module to request to obtain a media stream from a target network video recorder corresponding to the identifier of the camera module; and in accordance with a determination that a message of a successful feedback for the request is received from the target network video recorder, sending, by the station device management cloud module, the edge live streaming address to the client to cause the client to obtain the media stream from the edge all-in-one machine through the edge live streaming address and play the media stream.

According to the second aspect, in one possible implementation, before the receiving, by a station device management cloud module, a live streaming request message from a client, the method further includes: receiving, by the station device management cloud module, device information of the edge all-in-one machine, wherein the device information includes a device identifier of the edge all-in-one machine and an identifier of the second network; registering, by the station device management cloud module, the device information of the edge all-in-one machine, and establishing a correspondence relationship between the device identifier of the edge all-in-one machine and the identifier of the second network; the sending, by the station device management cloud module, the live streaming request message to an edge all-in-one machine includes: searching, by the station device management cloud module, at least one pre-stored correspondence relationship for whether there is an edge all-in-one machine having a correspondence relationship with the identifier of the second network; and in accordance with a determination that there is the edge all-in-one machine having a correspondence relationship with the identifier of the second network, sending the live streaming request message to the edge all-in-one machine.

According to the second aspect, in another possible implementation, before the receiving, by a station device management cloud module, a live streaming request message from a client, the method further includes: receiving, by the station device management cloud module, registration information of at least one network video recorder and of a camera module comprised in each of the at least one network video recorder in the second network, wherein the registration information is used for determining the target network video recorder and a video module that records a media stream.

According to the second aspect, in still another possible implementation, the edge all-in-one machine includes a station device management edge device and an AIoTVideo edge device; the sending, by the station device management cloud module, the live streaming request message to an edge all-in-one machine of the second network includes: sending, by the station device management cloud module, the live streaming request message to the station device management edge device; and the receiving, by the station device management cloud module, media stream service information which is fed back from the edge all-in-one machine based on the live streaming request message includes: receiving, by the station device management cloud module, the media stream service information forwarded by the station device management edge device.

In a third aspect, the present invention provides an apparatus for a media stream transmission. The apparatus includes: a first receiving unit, configured to receive a live streaming request message from a station device management cloud module in a first network, wherein the live streaming request message includes an identifier of a camera module which is requested for live streaming by a client, and the apparatus is located in the second network; the first network different from the second network; a generation unit, configured to generate media stream service information based on the identifier of the camera module, wherein the media stream service information includes: an edge live streaming address, an IP address of the edge all-in-one machine, and a port used for receiving a media stream; and a first sending unit, configured to send the media stream service information to the station device management cloud module to cause the station device management cloud module to request to obtain a media stream from a target network video recorder corresponding to the identifier of the camera module based on the edge live streaming address, the IP address, and the port, wherein the first receiving unit is further configured to: when the target network video recorder feeds back a successful request, receive the media stream recorded by the target network video recorder through a camera module; and the first sending unit is further configured to transmit the media stream to the client based on the edge live streaming address.

In a fourth aspect, the present invention provides another apparatus for a media stream transmission. The apparatus includes: a second receiving unit, configured to receive a live streaming request message from a client in a second network, wherein the live streaming request message includes an identifier of a camera module which is requested for live streaming; and a second sending unit, configured to send the live streaming request message to an edge all-in-one machine of the second network, wherein the second receiving unit is further configured to receive media stream service information which is fed back from the edge all-in-one machine based on the live streaming request message, wherein the media stream service information includes: an edge live streaming address, an IP address of the edge all-in-one machine, and a port used for receiving a media stream; the second sending unit is further configured to send the media stream service information and the identifier of the camera module to an AIoTVideo cloud module of the first network to cause the AIoTVideo cloud module to request to obtain a media stream from a target network video recorder corresponding to the identifier of the camera module; and the second sending unit is further configured to: in accordance with a determination that a message of a successful feedback for the request is received by the second receiving unit from the target network video recorder, send the edge live streaming address to the client to cause the client to obtain the media stream from the edge all-in-one machine through the edge live streaming address and play the media stream.

In a fifth aspect, the present invention further provides a system for a media stream transmission. The system includes: a station device management cloud module, an AIoTVideo cloud module, a client, an edge all-in-one machine, and at least one network video recorder; the station device management cloud module and the AIoTVideo cloud module are located in a first network; the client, the edge all-in-one machine, and the at least one network video recorder are located in a second network; the first network is a public network; and the second network is a private network.

The station device management cloud module is configured to: receive a live streaming request message from the client and send the live streaming request message to the edge all-in-one machine, wherein the live streaming request message includes an identifier of a camera module requesting live streaming; the edge all-in-one machine is configured to: receive the live streaming request message, generate media stream service information based on the identifier of the camera module, and send the media stream service information to the station device management cloud module, wherein the media stream service information includes: an edge live streaming address, an IP address of the edge all-in-one machine, and a port used for receiving a media stream; the station device management cloud module is configured to: receive the media stream service information and send the media stream service information and the identifier of the camera module to the AIoTVideo cloud module; the AIoTVideo cloud module is configured to: receive the media stream service information and the identifier of the camera module, and request to obtain a media stream from a target network video recorder corresponding to the identifier of the camera module; the target network video recorder is one of the at least one network video recorders; the edge all-in-one machine is configured to receive the media stream recorded by the target network video recorder through a camera module; the station device management cloud module is configured to send the edge live streaming address to the client; and the client is configured to obtain the media stream from the edge all-in-one machine through the edge live streaming address and play the media stream.

In a sixth aspect, the present invention provides an electronic device, including a memory and a processor. The memory and the processor are in communicative connection to each other; the memory has computer instructions stored thereon; and the processor executes the computer instructions to perform the method for the media stream transmission based on the edge device according to the above first aspect, the above second aspect, or any implementation corresponding to the first aspect and the second aspect.

In addition, the present invention provides a computer-readable storage medium, having computer instructions stored thereon. The computer instructions are used for causing a computer to perform the method for the media stream transmission based on the edge device according to the above first aspect, the above second aspect, or any implementation corresponding to the first aspect and the second aspect.

According to the method and apparatus for the media stream transmission, and the device provided in this embodiment, an edge device is arranged on the edge all-in-one machine of the second network (local area network), and establishes a long connection with at least one cloud module in the first network, such as the station device management cloud module and the AIoTVideo cloud module. When the client needs to ask for edge live streaming in the second network, the client receives, through the edge all-in-one machine, the media stream recorded by the camera module. The edge all-in-one machine receives media stream data of the network video recorder, transcodes the media stream data, and provides a local area network pull stream edge live streaming address for use by the client. The local area network transmits the media stream data, so that the public network, i.e. first network, bandwidth resources are saved, and the stability and fluency of video playing are improved.

### BRIEF DESCRIPTION OF THE DRAWINGS

To describe the technical solutions in the embodiments of the present invention or in the existing technology more clearly, the following will briefly introduce the accompanying drawings required to describe the specific implementations or the existing technology. Apparently, the accompanying drawings in the following description show merely some implementations of the present invention, and a person of ordinary skill in the art may still derive other drawings from the accompanying drawings without creative efforts.
FIG. 1 is a schematic diagram of a scenario of a media stream live streaming system according to an embodiment of the present invention;
FIG. 2 is a flowchart of a signaling of a method for a media stream transmission based on an edge device according to an embodiment of the present invention;
FIG. 3 is a flowchart of a signaling of another method for a media stream transmission based on an edge device according to an embodiment of the present invention;
FIG. 4 is a structural block diagram of an apparatus for a media stream transmission according to an embodiment of the present application;
FIG. 5 is a structural block diagram of another apparatus for a media stream transmission according to an embodiment of the present application; and
FIG. 6 is a schematic structural diagram of hardware of an electronic device according to an embodiment of the present application.

### DETAILED DESCRIPTION OF EMBODIMENTS

In order to make the objectives, technical solutions, and advantages of the embodiments of the present invention clearer, the technical solutions in the embodiments of the present invention are clearly described below with reference to the accompanying drawings in the embodiments of the present invention. Apparently, the described embodiments are merely some rather than all of the embodiments of the present invention. All other embodiments obtained by a person of ordinary skill in the art based on the embodiments of present invention without making creative efforts shall fall within the protection scope of present invention.

The technical solutions provided by the embodiments of the present invention are applied to a media stream live streaming system, or a media stream system in a live streaming logistic packaging process.

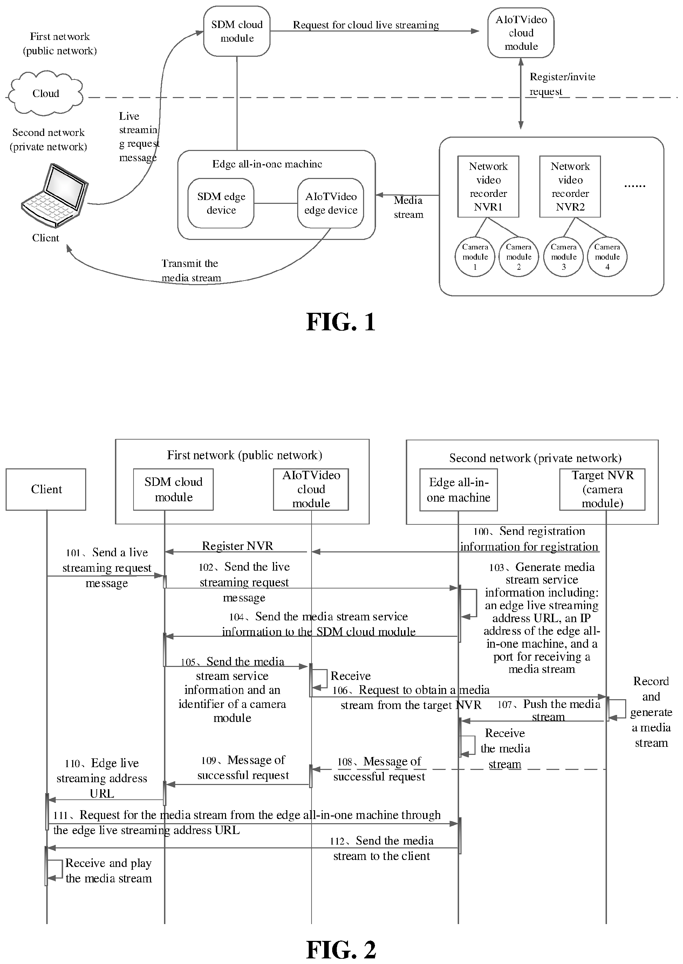

As shown in FIG. 1, the system includes: a Station Device Management (SDM) cloud module, an AIoTVideo cloud module, at least one client, an SDM edge device, an AIoTVideo edge device, at least one Network Video Recorder (NVR), and at least one camera module, such as a camera.

AIoT means AI+IoT, which is integration of an artificial intelligence technology and the Internet of Things in practical applications. The AIoTVideo cloud module means an AIoT cloud device with a video recording function. Similarly, the AIoTVideo edge device means an AIoT edge device with a video recording function.

In addition, the SDM cloud module (SDM_Cloud) and/or the AIoTVideo cloud module can be a network device, such as a server or server cluster, or a gateway. This embodiment will not limit this.

The at least one NVR includes NVR1, NVR2, ...., etc., where respective NVRs are connected to different camera modules using one or more channels. For example, NVR1 is connected to camera module 1 using channel 1 and is connected to camera module 2 using channel 2. Similarly, NVR2 is connected to camera module 3 using channel 3 and is connected to camera module 4 using channel 4.

Each camera module includes but is not limited to a camera, or may be another device with a picture capturing/recording function.

The functions of the various modules are as follows:

The SDM cloud module is responsible for managing metadata of a video device and providing an access for a service system to use a video device, such as viewing a state of a video device, viewing a real-time video, viewing recordings, and downloading recordings.

The SDM edge device (SMD_Edge), or referred to as an edge gateway, is responsible for communicating with the AIoTVideo edge device and submitting information of the AIoTVideo edge device to a cloud for scheduling by the AIoTVideo cloud module.

The AIoTVideo cloud module (AIoTVideo_Cloud) is responsible for connection to a video recorder device and performing device state management and control instruction interaction.

The AIoTVideo edge device (AIoTVideo_Edge) is responsible for receiving streams and transcoding of an edge-side video recorder.

The NVR is responsible for accessing a camera device, storing recordings, and being connected to a cloud to provide video preview, replay, and the like.

Further, the above various devices are wirelessly connected. Specifically, the SDM cloud module communicates with the AIoTVideo cloud module using a Hyper Text Transfer Protocol (HTTP); at least one NVR communicates with the AIoTVideo cloud module using a Socket protocol; at least one NVR communicates with AIoTVideo edge device using the Socket protocol; the SDM edge device and the SDM cloud module communicate with each other using the Socket protocol; and the SDM edge device communicates with the AIoTVideo edge device using the HTTP protocol.

Optionally, the SDM edge device and the AIoTVideo edge device are separately arranged in two devices, or can be integrated into the same device. In this case, the SDM edge device and the AIoTVideo edge device are two functional modules integrated into one device. This device can be referred to as "edge all-in-one machine".

In general, the NVR establishes connection with a cloud signaling service using a GB28181 protocol (the GB28181 protocol is a national standard in the field of video monitoring). When a video is played in real time, the NVR transmits video data to the cloud through a public network, and then a user pulls corresponding video media stream data through the cloud. However, when there is a large number of workstations and the view count of a video media stream is large, a large number of public network bandwidth resources will be occupied, which may cause network congestion, transmission delay, unstable real-time video playing, and other problems.

To solve the above technical problems, the technical solutions provided in the embodiments of the present application provide a method for the media stream transmission based on an edge device. The method classifies the above various device into two networks in advance, namely a first network and a second network. The first network includes the SDM cloud module and the AIoTVideo cloud module. The second network includes: the SDM edge device, the AIoTVideo edge device, the at least one NVR, and the at least one camera module. In addition, the first network and the second network may further include other more or less modules/apparatuses. This embodiment does not limit this.

In addition, at least one client can be set in both the first network and the second network. For example, a first client (client1) is located in the first network, and a second client (client2) is located in the second network. This embodiment does not limit this, but in this embodiment, the client being located in the second network is taken as an example.

Optionally, the first network may be referred to as a public network, or out-of-warehouse, and the second network may be referred to as a private network, such as a local area network, or in-warehouse.

In this embodiment, the SDM edge device and an SDM edge streaming service (the AIoTVideo cloud module) are set in the warehouse, so that when a real-time video is played in the warehouse, the media stream data is transmitted using the SDM edge device through the private network. In the public network, the video is pulled using cloud live streaming through the public network, thereby saving public network bandwidth resources.

### Embodiment I

FIG. 2 is a method for a media stream transmission based on an edge device provided in this embodiment. The method includes the following method steps:
Step 100: Preparation phase: Each NVR sends registration information to an AIoTVideo cloud module and registers the at least one NVR in a cloud network.

In an implementation, each NVR registers information of a camera module on the AIoTVideo cloud module using a GB28181 protocol. Further, this step further includes:
The NVR sends channel information to the AIoTVideo cloud module. The channel information includes: a channel identifier and a national standard ID. The channel means a communication link between each camera module and the NVR connected to the camera module. The channel may be represented as an Internet Protocol Camera (IPC) camera. The IPC camera is a network protocol-based camera, or referred to as a network camera or network monitoring camera. The camera transmits video and audio data using network connection (such as Ethernet), and communicates with other devices through a network.

In addition, the national standard ID is used for identifying each channel, such as national standard ID1 and national standard ID2. Optionally, the national standard ID can be a character string composed of numbers, letters, and symbols.

The preparation phase further includes: the AIoTVideo cloud module receives the channel information, generates video device information, and sends the video device information to the SDM cloud module. After receiving the video device information, the SDM cloud module saves video device metadata, namely, the video device information.

The video device information includes at least one parent-child relationship. If NVR1 is connected with two camera modules, the corresponding device identifiers are IPC1 and IPC2. Therefore, an established parent-child relationship is: NVR1 IPC1&IPC2. Similarly, it is possible to establish each of other NVRs and a camera module IPC connected to the NVR, and store the information on the SDM cloud module.

The method provided in this embodiment will be explained in detail below.

As shown in FIG. 2, the method for the media stream transmission includes:
Step 101. A client specifies a channel to send an edge live streaming request message to an SDM cloud module. Correspondingly, the SDM cloud module receives the live streaming request message from the client.

The live streaming request message includes an identifier of a camera module requesting live streaming. For example, the identifier of the camera module is IPC1 or channel 1, indicating a request to obtain a live streaming media stream from IPC1, or a request to obtain a live streaming media stream from IPC1 connected to channel 1.

The client is a client located in the second network. The client can be a terminal device, including but not limited to various personal computers (PCs), laptops, smartphones, tablets, and the like.

Step 102. The SDM cloud module sends the live streaming request message to an edge all-in-one machine for requesting to obtain a media stream from at least one NVR.

Step 103. After receiving the live streaming request message from the SDM cloud module, the edge all-in-one machine generates media stream service information based on the identifier of the camera module.

The media stream service information includes: an edge live streaming address Unified Resource Locator (URL), an IP address of the edge all-in-one machine, and a port of the edge all-in-one machine for receiving a media stream. The IP address of the edge all-in-one machine and the port (port number) for receiving a media stream can be preset and stored on the edge all-in-one machine for use to generate media stream service information.

Step 104. The edge all-in-one machine sends the media stream service information to the SDM cloud module.

Correspondingly, the SDM cloud module receives the media stream service information which is fed back from the edge all-in-one machine, and the media stream service information includes: the edge live streaming address URL, the IP address of the edge all-in-one machine, the port, and the like.

Step 105. The SDM cloud module sends the media stream service information and the identifier of the camera module to the AIoTVideo cloud module. The media stream service information is obtained at step 104 above, and the identifier of the camera module is obtained at step 101.

Step 106. The AIoTVideo cloud module receives the media stream service information and the identifier of the camera module, and requests to obtain a media stream from a target NVR corresponding to the identifier of the camera module based on the information.

Specifically, the AIoTVideo cloud module determines the target NVR based on the identifier of the camera module, and then sends an invite request to the target NVR to request to obtain the media stream from the target NVR. The invite request includes the IP of the edge all-in-one machine and the port of the edge all-in-one machine for receiving a video/media stream.

Further, in an implementation that the AIoTVideo cloud module determines the target NVR, the AIoTVideo cloud module searches for an NVR associated with the current IPC1 based on the identifier of the camera module, such as the at least one parent-child relationship (the video device information stored in the foregoing preparation phase) that is pre-stored by IPC1, as the target NVR. In this example, assuming that IPC1 is associated with NVR1, namely, if there is a parent-child relationship, the target NVR is NVR1.

Step 107. When IPC1 is turned on, a video of a surrounding environment is captured and recorded, and a media stream is generated. The media stream is pushed to the edge all-in-one machine through the target NVR.

Correspondingly, the edge all-in-one machine receives and stores the media stream pushed by the target NVR in real time.

Step 108. The target NVR returns a response to the AIoTVideo cloud module based on the invite request in step 106 above. The response can be a message indicating a successful or failed request.

Correspondingly, the AIoTVideo cloud module receives the response and makes a judgment. If the AIoTVideo cloud module receives the message indicating the successful request, for example, if the AIoTVideo cloud module receives the response, it indicates that the invitation succeeds. Step 109 is executed.

If the AIoTVideo cloud module does not receive the response, it indicates that the request fails. If the request fails, and the process ends. Further, whether the request succeeds can be indicated and determined based on fields or identification codes in the response.

Step 109. The AIoTVideo cloud module sends the message (i.e. the response) indicating the successful request in step 108 to the SDM cloud module.

Step 110. After receiving the message indicating the successful request, the SDM cloud module sends the edge live streaming address URL to the client. Optionally, the URL is also referred to as the edge live streaming address URL.

Step 111. After receiving the edge live streaming address URL, the client requests to obtain the media stream from the edge all-in-one machine through the edge live streaming address URL.

Step 112. The edge all-in-one machine sends, based on the URL, the media stream received in step 107 to the client.

The client receives the media stream and uses playing software of the client to play the media stream in real time, achieving live streaming of the media stream on the client.

According to the method provided in this embodiment, an edge device is arranged on the edge all-in-one machine of the second network (local area network), and establishes a long connection with at least one cloud module in the first network, such as the SDM cloud module and the AIoTVideo cloud module. When the client needs to ask for edge live streaming in the local area network, the client receives, through the edge all-in-one machine, the media stream recorded by the camera module. The edge all-in-one machine receives media stream data of the NVR, transcodes the media stream data, and provides a local area network pull stream edge live streaming address URL for use by the client. The local area network transmits the media stream data, so that public network bandwidth resources are saved, and the stability and fluency of video playing are improved.

### Embodiment II

This embodiment is based on the aforementioned embodiment I. The edge all-in-one machine is split into: an SDM edge device and an AIoTVideo edge device. The process of the method for the media stream transmission of the aforementioned embodiment I.

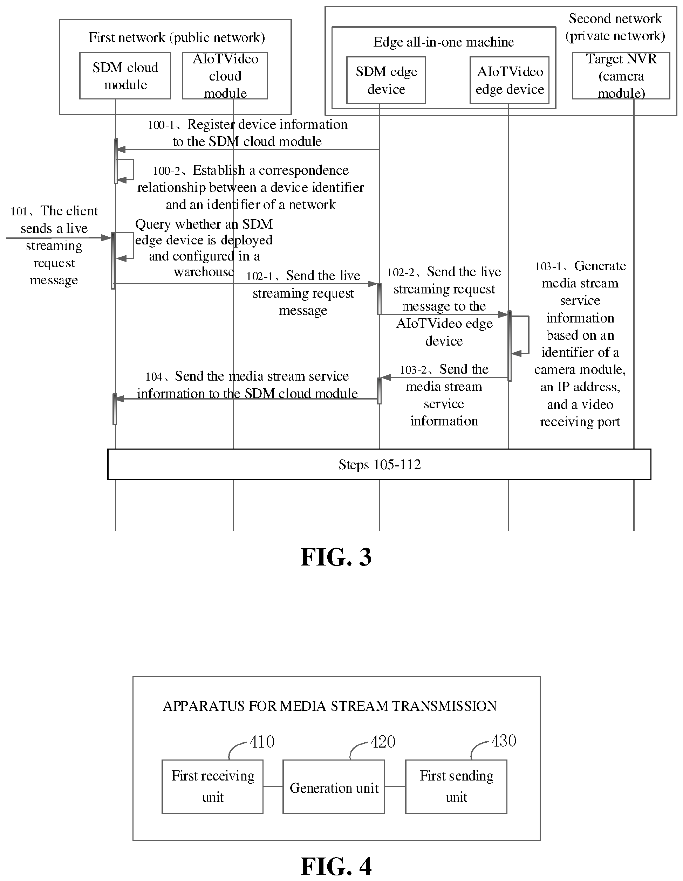

FIG. 3 is a flowchart of a signaling of method for the media stream transmission based on an edge device provided in this embodiment.

Firstly, in a preparation phase, step 100 further includes:
Step 100-1. An SDM edge device registers device information to an SDM cloud module. The device information includes: a device identifier of the SDM edge device and an internal identifier.

Specifically, the device identifier of the SDM edge device can be a device name, a model number, a device ID, or the like. The internal identifier can be an identifier of the second network (the local area network), an IP address, or the like. In this embodiment, it is assumed that the internal identifier is identifier 1.

Step 100-2. After receiving the registered device information, the SDM cloud module establishes a correspondence relationship between the device identifier of the SDM edge device and the internal identifier. For example, a first correspondence relationship between device identifier ID1 and the IP address (i.e. identifier 1) of the second network is established.

It should be understood that correspondence relationships between device identifiers of other edge devices and an internal network can be further established, such as a second correspondence relationship and a third correspondence relationship.

Step 101. A client specifies a channel to send the live streaming request message to the SDM cloud module, which is the same as step 101 in Embodiment I.

After receiving the live streaming request message, the SDM cloud module uses a database to query whether an SDM edge device is deployed and configured in a current warehouse (the second network). If yes, step 102-1 is executed. If no, no SDM edge device is deployed, and edge live streaming is not supported. The process ends.

The query process specifically includes: The SDM cloud module searches for whether there is a first correspondence relationship in the at least one pre-stored correspondence relationship (established by step 100-1 and step 100-2 above) based on identifier 1 of the warehouse (second network). The first correspondence relationship is a correspondence relationship between identifier 1 and the device identifier of the SDM edge device. If there is a first correspondence relationship, it is determined that an SDM edge device is deployed. If there is no first correspondence relationship, the SDM edge device is not deployed.

Step 102-1. If it is determined that an SDM edge device is deployed in the warehouse, the SDM cloud module sends the live streaming request message to the SDM edge device. The request message includes an identifier of a camera module used for indicating that the client intends to call live streaming media stream data of an IPC.

Step 102-2. The SDM edge device sends the live streaming request message to an AIoTVideo edge device, and sends an edge pulling creation request (including the identifier of the camera module). At this time, the AIoTVideo edge device is ready to receive a media stream.

Step 103-1. After receiving the pulling creation request, the AIoTVideo edge device generates media stream service information based on the identifier of the camera module, an IP address of the AIoTVideo edge device, and a port of the AIoTVideo edge device for receiving a video.

The media stream service information includes: an edge live streaming address URL, the IP address of the AIoTVideo edge device, a port (port number), and the like.

Step 103-2. The AIoTVideo edge device sends the media stream service information to the SDM edge device.

Step 104. After receiving the media stream service information, the SDM edge device forwards the media stream service information to the SDM cloud module.

After receiving the media stream service information, the SDM cloud module sends the media stream service information and the identifier of the camera module to the AIoTVideo cloud module to invite AIoTVideo cloud module for edge pulling. After receiving the media stream service information, the AIoTVideo cloud module determines a target NVR based on the identifier of the camera module and sends an invite request to the target NVR. The invite request includes the IP address of the AIoTVideo edge device and the aforementioned video port. The AIoTVideo edge device further receives the media stream sent by the target NVR, and sends, when receiving the edge live streaming address URL from the client, the media stream to the client.

The specific implementation process is the same as step 105 to step 112 in Embodiment I, refer to the description of the foregoing embodiment I. This embodiment will not elaborate here.

In this embodiment, the functions of the edge all-in-one machine are classified into two functional modules: the SDM edge device and the AIoTVideo edge device. The SDM edge device (or an SDM edge gateway) is responsible for communicating with the AIoTVideo edge device and submitting its information to the cloud for scheduling by the AIoTVideo cloud module. The AIoTVideo edge device is responsible for receiving streams and transcoding of an edge-side NVR. An edge gateway is provided, which is deployed on a user site in a privation manner. The system can configure a designated warehouse to use edge live streaming. When live streaming is requested on site, the edge gateway receives the media stream data from a video cassette recorder and transcodes the media stream data to provide a local area network pulling address for use by user. Transmitting the video data through the local area network saves public network bandwidths and improves the stability and fluency of video playing.

In some embodiments, the present invention further provides an apparatus for a media stream transmission. The apparatus is configured to implement the method in the above embodiments. The content that has been explained will not be elaborated here. As used below, the term "unit" can be a combination of software and/or hardware that implements a predetermined function. Although the apparatus described in the following embodiments is preferably implemented in software, the implementation of hardware or a combination of software and hardware is also possible and envisioned.

As shown in FIG. 4, this embodiment provides apparatus for a media stream transmission. The apparatus includes: a first receiving unit 410, a generation unit 420, and a first sending unit 430. The apparatus is configured to achieve some or all of the functions of the foregoing edge all-in-one machine.

The first receiving unit 410 is configured to receive a live streaming request message from a station device management cloud module in a first network, wherein the live streaming request message includes an identifier of a camera module which is requested for live streaming by a client.

The generation unit 420 is configured to generate media stream service information based on the identifier of the camera module, wherein the media stream service information includes: an edge live streaming address, an IP address of the edge all-in-one machine, and a port used for receiving a media stream.

The first sending unit 430 is configured to send the media stream service information to the station device management cloud module to cause the station device management cloud module to request to obtain a media stream from a target network video recorder corresponding to the identifier of the camera module based on the edge live streaming address, the IP address, and the port. The target network video recorder and the camera module are located in a second network.

The first receiving unit 410 is further configured to: when the target network video recorder feeds back a successful request, receive the media stream recorded by the target network video recorder through a camera module.

The first sending unit 430 is further configured to transmit the media stream to the client based on the edge live streaming address.

Optionally, in one specific implementation, the edge all-in-one machine includes a station device management edge device and an AIoTVideo edge device.

The first receiving unit 410 is specifically configured to receive the live streaming request message from the station device management cloud module.

The first sending unit 430 is further configured to send the live streaming request message to the AIoTVideo edge device.

Optionally, in another specific implementation, the first receiving unit 410 is further configured to receive the live streaming request message from the station device management edge device.

The generation unit 420 is further configured to generate the media stream service information based on the identifier of the camera module, an IP address of the AIoTVideo edge device, and a video receiving port of the AIoTVideo edge device.

The first sending unit 430 is further configured to send the media stream service information to the station device management edge device.

Optionally, in still another specific implementation, the first receiving unit 410 is further configured to receive the media stream service information from the AIoTVideo edge device.

The first sending unit 430 is further configured to forward the media stream service information to the station device management cloud module.

Optionally, in yet another specific implementation, the first receiving unit 410 is further configured to receive the media stream from the target network video recorder.

The first sending unit 430 is further configured to: when the first receiving unit 410 receives the edge live streaming address from the client, send the media stream to the client.

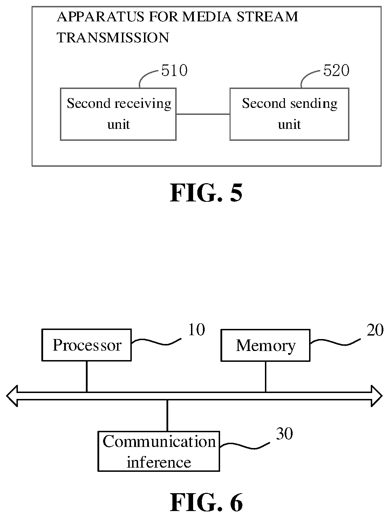

In addition, in another embodiment, as shown in FIG. 5, the present invention further provides another apparatus for a media stream transmission. The apparatus includes: a second receiving unit 510 and a second sending unit 520. In addition, the apparatus may further include other units and modules, such as a storage unit and a processing unit. This embodiment does not limit this.

The second receiving unit 510 is configured to receive a live streaming request message from a client in a second network, wherein the live streaming request message includes an identifier of a camera module which is requested for live streaming.

The second sending unit 520 is configured to send the live streaming request message to an edge all-in-one machine of the second network.

The second receiving unit 510 is further configured to receive media stream service information which is fed back from the edge all-in-one machine based on the live streaming request message, wherein the media stream service information includes: an edge live streaming address, an IP address of the edge all-in-one machine, and a port used for receiving a media stream.

The second sending unit 520 is further configured to send the media stream service information and the identifier of the camera module to an AIoTVideo cloud module of a first network to cause the AIoTVideo cloud module to request to obtain a media stream from a target network video recorder corresponding to the identifier of the camera module.

The second sending unit 520 is further configured to: in accordance with a determination that a message of a successful feedback for the request is received by the second receiving unit 510 from the target network video recorder, send the edge live streaming address to the client to cause the client to obtain the media stream from the edge all-in-one machine through the edge live streaming address and play the media stream.

Optionally, in one specific implementation, the second receiving unit 510 is further configured to receive device information of the edge all-in-one machine, wherein the device information includes a device identifier of the edge all-in-one machine and an identifier of the second network.

The apparatus further includes a processing unit. The processing unit is not shown in FIG. 5. The processing unit is configured to: register the device information of the edge all-in-one machine, and establish a correspondence relationship between the device identifier of the edge all-in-one machine and the identifier of the second network.

The processing unit is further configured to: search at least one pre-stored correspondence relationship for whether there is an edge all-in-one machine having a correspondence relationship with the identifier of the second network; and in accordance with a determination that there is the edge all-in-one machine having a correspondence relationship with the identifier of the second network, send the live streaming request message to the edge all-in-one machine through the second sending unit 520.

Optionally, in still another specific implementation, the second receiving unit 510 is further configured to receive registration information of at least one network video recorder and of a camera module comprised in each of the at least one network video recorder in the second network, wherein the registration information is used for determining the target network video recorder and a video module that records a media stream.

Optionally, in yet another implementation, the edge all-in-one machine includes a station device management edge device and an AIoTVideo edge device.

The second sending unit 520 is further configured to send the live streaming request message to the station device management edge device.

The second receiving unit 510 is configured to receive the media stream service information forwarded by the station device management edge device.

The apparatus for a media stream transmission in this embodiment is presented in the form of functional units. The units here are Application Specific Integrated Circuit (ASICs), processors and memories that execute one or more software or fixed programs, and/or other devices that can provide the above functions.

The further function descriptions of the above modules and units are the same as the corresponding embodiments mentioned above, and will not be elaborated here.

In addition, this application further provides a media stream live streaming system. The system includes the apparatus for a media stream transmission as shown in FIG. 4 or FIG. 5, configured to perform the method for the media stream transmission in the foregoing embodiment I and embodiment II.

The system includes a first network composed of different devices and a second network composed of different devices. The devices included in the first network and the second network and connection relationships are found in FIG. 1.

Specifically, the station device management cloud module is configured to: receive a live streaming request message from the client of the second network and send the live streaming request message to the edge all-in-one machine of the second network, wherein the live streaming request message includes an identifier of a camera module requesting live streaming.

The edge all-in-one machine is configured to: receive the live streaming request message, generate media stream service information based on the identifier of the camera module, and send the media stream service information to the station device management cloud module, wherein the media stream service information includes: an edge live streaming address, an IP address of the edge all-in-one machine, and a port used for receiving a media stream.

The station device management cloud module is configured to: receive the media stream service information and send the media stream service information and the identifier of the camera module to the AIoTVideo cloud module.

The AIoTVideo cloud module is configured to: receive the media stream service information and the identifier of the camera module, and request to obtain a media stream from a target network video recorder corresponding to the identifier of the camera module; and the target network video recorder is one of the at least one network video recorders.

The edge all-in-one machine is configured to receive the media stream recorded by the target network video recorder through a camera module.

The station device management cloud module is configured to send the edge live streaming address to the client.

The client is configured to obtain the media stream from the edge all-in-one machine through the edge live streaming address and play the media stream.

Optionally, in one possible implementation of this embodiment, if the edge all-in-one machine includes: a station device management edge device and an AIoTVideo edge device, the functions of the above edge all-in-one machine specifically include:
The station device management edge device is configured to: receive a live streaming request message from the station device management cloud module, and send the live streaming request message to the AIoTVideo edge device; and
the AIoTVideo edge device is configured to: receive the live streaming request message from the station device management edge device, generate the media stream service information based on the identifier of the camera module in the live streaming request message, the IP address of the AIoTVideo edge device, and the video receiving port of the AIoTVideo edge device, and send the media stream service information to the station device management edge device.

Optionally, in another possible implementation of this embodiment, the above station device management edge device is further configured to: receive the media stream service information from the AIoTVideo edge device, and forward the media stream service information to the station device management cloud module.

Correspondingly, the station device management cloud module receives the media stream service information send by the station device management edge device.

Optionally, in still another possible implementation of this embodiment, the functions of the above edge all-in-one machine further include: the AIoTVideo edge device is configured to receive the media stream from the target network video recorder; the client is further configured to send the edge live streaming address to the AIoTVideo edge device; and the AIoTVideo edge device is further configured to: when receiving the edge live streaming address from the client, send the media stream to the client.

Optionally, in yet another possible implementation of this embodiment, before receiving the live streaming request message from the client, the station device management cloud module is specifically further configured to receive device information of the edge all-in-one machine, wherein the device information includes a device identifier of the edge all-in-one machine and an identifier of the second network.

The station device management cloud module is specifically further configured to: register the device information of the edge all-in-one machine, and establish a correspondence relationship between the device identifier of the edge all-in-one machine and the identifier of the second network.

When the client sends the live streaming request message to the station device management cloud module, the station device management cloud module is further configured to: search at least one pre-stored correspondence relationship for whether there is an edge all-in-one machine having a correspondence relationship with the identifier of the second network; and in accordance with a determination that there is the edge all-in-one machine having a correspondence relationship with the identifier of the second network, determine that an edge device, i.e. the edge all-in-one machine, is pre-deployed, and send the live streaming request message to the edge all-in-one machine.

Optionally, in still yet another possible implementation of this embodiment, before receiving a live streaming request message from a client, the station device management cloud module is specifically further configured to: receive registration information of at least one network video recorder and of a camera module comprised in each of the at least one network video recorder in the second network, and determine, based on the registration information, the target network video recorder and the video module that records a media stream.

Optionally, in yet still another possible implementation of this embodiment, if the edge all-in-one machine includes: a station device management edge device and an AIoTVideo edge device, the functions of the above edge all-in-one machine specifically include: the station device management cloud module is further configured to send the live streaming request message to the station device management edge device; the station device management edge device is further configured to: receive the live streaming request message and forward the live streaming request message to the AIoTVideo edge device; the AIoTVideo edge device is configured to: receive the live streaming request message, generate the media stream service information based on the live streaming request message, and send the media stream service information to the station device management edge device; and the station device management edge device is further configured to receive and forward the media stream service information to the station device management cloud module. Correspondingly, the station device management cloud module is further configured to receive the media stream service information forwarded by the station device management edge device.

In the system embodiment, data/information interaction between various devices and various modules, and the intermediate data processing process can be found in the explanations of the foregoing embodiments of FIG. 2 and FIG. 3, and will not be elaborated in this embodiment.

The system provided in this embodiment uses the edge all-in-one machine in the second network to obtain and store the media stream data for use by the client in the second network. The media stream data is transmitted through the local area network, thus saving public network bandwidths and improving the stability and fluency of video playing.

In addition, the embodiments of the present invention further provide an electronic device, including the above apparatus for a media stream transmission shown in FIG. 4 or FIG. 5.

FIG. 6 is a schematic structural diagram of an electronic device provided in an optional embodiment of the present invention. The electronic device includes: one or more processors 10, a memory 20, and interfaces for connecting the various components, including a high-speed interface and a low-speed interface. The various components are in communicative connection to each other using different buses, and can be mounted on a common motherboard or in other ways as needed. The processor can process instructions executed in the electronic device, including instructions stored in or on the memory to display graphical information of a Graphical User Interface (GUI) on an external input/output apparatus (such as a display device coupled to an interface).

In some optional implementations, if necessary, a plurality of processors and/or a plurality of buses can be used together with a plurality of memories and a plurality of memories. Similarly, a plurality of electronic devices can be connected. The various devices provide some necessary operations (such as serving as a server array, a group of blade servers, or a multiprocessor system). In FIG. 6, one processor 10 is taken as an example.

The processor 10 can be a central processing unit, a network processor, or a combination thereof. The processor 10 can further include a hardware chip. The above hardware chip can be an ASIC, a programmable logic device, or a combination thereof. The above-mentioned programmable logic device can be a complex programmable logic device, a field programmable logic gate array, a general-purpose array logic, or any combination thereof.

The memory 20 stores instructions that can be executed by at least one processor 10 to cause the at least one processor 10 to implement the method for the media stream transmission illustrated in the above embodiment.

The memory 20 may include a program storage region and a data storage region. The program storage region may store an operating system and an application program required by at least one function. The data storage region may store data created according to use of the electronic device presented on a homepage of a mini program. In addition, the memory 20 may include a high-speed random access memory and may further include a non-transient memory, such as at least one disk storage device, a flash memory device, or other non-transient solid-state storage devices. In some optional implementations, the memory 20 includes a memory remotely located with respect to the processor 10. These remote memories can be connected to the electronic device through a network. Examples of the above network include, but are not limited to, Internets, intranets, local area networks, mobile communication networks, and combinations thereof.

The memory 20 may include a volatile memory, such as a random access memory. Or, the memory may include a non-volatile memory, such as a flash memory, a hard disk drive, or a solid-state disk drive. The memory 20 can further include a combination of the aforementioned types of memories.

The electronic device further includes an input apparatus and an output apparatus (not shown in FIG. 6). The input apparatus and the output apparatus can be connected by a bus or in another way. Further, the input apparatus may receive input numeric or character information and generate key signal inputs related to user settings and function control of the electronic device, such as a touch screen, a keypad, a mouse, a trackboard, a touch panel, an indicator stem, one or more mouse buttons, a trackball, and a control lever. The output apparatus may include a display device, an auxiliary lighting apparatus (such as an LED), a tactile feedback apparatus (such as a vibration motor), and the like. The above display device includes but is not limited to a liquid crystal display, a light emitting diode, a display, and a plasma display. In some optional implementations, the display device can be a touch screen.

The electronic device further includes a communication interface 30, used for communicating the electronic device with other devices or communication networks.

It should be understood that the electronic device can be further any one of the SDM cloud module, the AIoTVideo cloud module, the client, the SDM edge device, and the AIoTVideo edge device. This embodiment will not limit this here.

The embodiments of the present invention further provide a computer-readable storage medium. The above method according to the embodiments of the present invention can be implemented in hardware or firmware, or can be implemented as being recordable on a storage medium, or implemented as a computer code that is downloaded through a network, originally stored on a remote storage medium or a non-transient machine-readable storage medium, and to be stored on a local storage medium. Therefore, the method described here can be processed by software stored on a storage medium using a general-purpose computer, a dedicated processor, or programmable or dedicated hardware.

The storage medium can be a magnetic disk, a compact disc, a read-only memory, a random access memory, a flash memory, a hard disk drive, a solid-state hard disk drive, or the like. Further, the storage medium may further include a combination of the aforementioned types of memories. It can be understood that a computer, processor, microprocessor controller, or programmable hardware includes a storage component that can store or receive software or a computer code. When the software or computer code is accessed and executed by the computer, processor, or hardware, the media stream transmission based on the edge device illustrated above is implemented.

Although the embodiments of the present invention are described in conjunction with the accompanying drawings, those skilled in the art may make various modifications and transformations without departing from the spirit and scope of the present invention. These modifications and transformations shall fall within the scope defined by the attached claims.

## Claims

1. A method for a media stream transmission based on an edge device, comprising:
receiving, by an edge all-in-one machine, a live streaming request message from a station device management (SDM) cloud module in a first network, wherein the live streaming request message comprises an identifier of a camera module which is requested for live streaming by a client in a second network, and the edge all-in-one machine is located in the second network;
generating, by the edge all-in-one machine, media stream service information based on the identifier of the camera module, wherein the media stream service information comprises: an edge live streaming address, an Internet protocol (IP) address of the edge all-in-one machine, and a port used for receiving a media stream;
sending, by the edge all-in-one machine, the media stream service information to the station device management cloud module, to cause the station device management cloud module to request to obtain the media stream from a target network video recorder corresponding to the identifier of the camera module based on the edge live streaming address, the IP address, and the port;
in accordance with a determination that a successful feedback for the request is from the target network video recorder, receiving, by the edge all-in-one machine, the media stream recorded by the target network video recorder through the camera module; and
transmitting the media stream to the client based on the edge live streaming address.

2. The method according to claim 1, wherein the edge all-in-one machine comprises a station device management edge device and an artificial intelligence Internet of things Video (AIoTVideo) edge device, and
wherein receiving, by the edge all-in-one machine, the live streaming request message from the station device management cloud module in the first network comprises:
receiving, by the station device management edge device, the live streaming request message from the station device management cloud module; and
sending, by the station device management edge device, the live streaming request message to the AIoTVideo edge device.

3. The method according to claim 2, wherein generating, by the edge all-in-one machine, the media stream service information based on the identifier of the camera module comprises:
receiving, by the AIoTVideo edge device, the live streaming request message from the station device management edge device;
generating, by the AIoTVideo edge device, the media stream service information based on the identifier of the camera module, an IP address of the AIoTVideo edge device, and a video receiving port of the AIoTVideo edge device; and
sending, by the AIoTVideo edge device, the media stream service information to the station device management edge device.

4. The method according to claim 3, wherein sending, by the edge all-in-one machine, the media stream service information to the station device management cloud module comprises:
receiving, by the station device management edge device, the media stream service information from the AIOTVideo edge device; and
forwarding the media stream service information to the station device management cloud module.

5. The method according to claim 4, wherein receiving, by the edge all-in-one machine, the media stream recorded by the target network video recorder through the camera module, and transmitting the media stream to the client based on the edge live streaming address comprise:
receiving, by the AIoTVideo edge device, the media stream from the target network video recorder; and
in response to receiving the edge live streaming address from the client, sending, by the AIoTVideo edge device, the media stream to the client.

6. A method for media stream transmission based on an edge device, comprising:
receiving, by a station device management (SDM) cloud module, a live streaming request message from a client in a second network, wherein the live streaming request message comprises an identifier of a camera module which is requested for live streaming, and the station device management cloud module is located in a first network;
sending, by the station device management cloud module, the live streaming request message to an edge all-in-one machine in the second network;
receiving, by the station device management cloud module, media stream service information which is fed back from the edge all-in-one machine based on the live streaming request message, wherein the media stream service information comprises: an edge live streaming address, an Internet protocol (IP) address of the edge all-in-one machine, and a port used for receiving a media stream;
sending, by the station device management cloud module, the media stream service information and the identifier of the camera module to an artificial intelligence Internet of things Video (AIoTVideo) cloud module in the first network, to cause the AIoTVideo cloud module to request to obtain the media stream from a target network video recorder corresponding to the identifier of the camera module; and
in accordance with a determination that a message of a successful feedback for the request is received from the target network video recorder, sending, by the station device management cloud module, the edge live streaming address to the client, to cause the client to obtain the media stream from the edge all-in-one machine through the edge live streaming address and play the media stream.

7. The method according to claim 6, further comprising:
receiving, by the station device management cloud module, device information of the edge all-in-one machine, wherein the device information comprises a device identifier of the edge all-in-one machine and an identifier of the second network;
registering, by the station device management cloud module, the device information of the edge all-in-one machine; and
establishing a correspondence relationship between the device identifier of the edge all-in-one machine and the identifier of the second network;
and wherein sending, by the station device management cloud module, the live streaming request message to the edge all-in-one machine comprises:
searching, by the station device management cloud module, at least one pre-stored correspondence relationship for whether there is an edge all-in-one machine having a correspondence relationship with the identifier of the second network; and
in accordance with a determination that there is the edge all-in-one machine having a correspondence relationship with the identifier of the second network, sending the live streaming request message to the edge all-in-one machine.

8. The method according to claim 6, further comprising:
receiving, by the station device management cloud module, registration information of at least one network video recorder and of a camera module comprised in each of the at least one network video recorder in the second network, wherein the registration information is used for determining the target network video recorder and the video module that records the media stream.

9. The method according to any of claims 6 to 8, wherein the edge all-in-one machine comprises a station device management edge device and an AIoTVideo edge device;
wherein sending, by the station device management cloud module, the live streaming request message to the edge all-in-one machine of the second network comprises:
sending, by the station device management cloud module, the live streaming request message to the station device management edge device; and
wherein receiving, by the station device management cloud module, the media stream service information which is fed back from the edge all-in-one machine based on the live streaming request message comprises:
receiving, by the station device management cloud module, the media stream service information forwarded by the station device management edge device.

10. An apparatus for a media stream transmission, comprising:
a first receiving unit, configured to receive a live streaming request message from a station device management cloud module in a first network, wherein the live streaming request message comprises an identifier of a camera module which is requested for live streaming by a client in a second network, and the apparatus is located in the second network;
a generation unit, configured to generate media stream service information based on the identifier of the camera module, wherein the media stream service information comprises: an edge live streaming address, an IP address of the edge all-in-one machine, and a port used for receiving a media stream;
a first sending unit, configured to send the media stream service information to the station device management cloud module, to cause the station device management cloud module to request to obtain the media stream from a target network video recorder corresponding to the identifier of the camera module based on the edge live streaming address, the IP address, and the port;
the first receiving unit, further configured to: in accordance with a determination that a successful feedback for the request is from the target network video recorder, receive the media stream recorded by the target network video recorder through the camera module; and
the first sending unit, further configured to transmit the media stream to the client based on the edge live streaming address.

11. An apparatus for a media stream transmission, comprising:
a second receiving unit, configured to receive a live streaming request message from a client in a second network, wherein the live streaming request message comprises an identifier of a camera module which is requested for live streaming;
a second sending unit, configured to send the live streaming request message to an edge all-in-one machine in the second network;
the second receiving unit, further configured to receive media stream service information which is fed back from the edge all-in-one machine based on the live streaming request message, wherein the media stream service information comprises: an edge live streaming address, an IP address of the edge all-in-one machine, and a port used for receiving a media stream;
the second sending unit, further configured to send the media stream service information and the identifier of the camera module to an AIoTVideo cloud module in the first network, to cause the AIoTVideo cloud module to request to obtain the media stream from a target network video recorder corresponding to the identifier of the camera module; and
the second sending unit, further configured to: in accordance with a determination that a message of a successful feedback for the request is received by the second receiving unit from the target network video recorder, send the edge live streaming address to the client, to cause the client to obtain the media stream from the edge all-in-one machine through the edge live streaming address and play the media stream.

12. A system for a media stream transmission, comprising: a station device management cloud module, an artificial intelligence Internet of things Video (AIoTVideo) cloud module, a client, an edge all-in-one machine, and at least one network video recorder; wherein the station device management cloud module and the AIoTVideo cloud module are located in a first network; the client, the edge all-in-one machine, and the at least one network video recorder are located in a second network;
the station device management cloud module is configured to: receive a live streaming request message from the client, and send the live streaming request message to the edge all-in-one machine, wherein the live streaming request message comprises an identifier of a camera module which is requested for live streaming;
the edge all-in-one machine is configured to: receive the live streaming request message, generate media stream service information based on the identifier of the camera module, and send the media stream service information to the station device management cloud module, wherein the media stream service information comprises: an edge live streaming address, an IP address of the edge all-in-one machine, and a port used for receiving the media stream;
the station device management cloud module is configured to: receive the media stream service information, and send the media stream service information and the identifier of the camera module to the AIoTVideo cloud module;
the AIoTVideo cloud module is configured to: receive the media stream service information and the identifier of the camera module, and request to obtain the media stream from a target network video recorder corresponding to the identifier of the camera module, wherein the target network video recorder is one of the at least one network video recorder;
the edge all-in-one machine is configured to receive the media stream recorded by the target network video recorder through the camera module;
the station device management cloud module is configured to send the edge live streaming address to the client; and
the client is configured to obtain the media stream from the edge all-in-one machine based on the edge live streaming address and play the media stream.

13. An electronic device, comprising a memory and a processor, wherein the memory and the processor are connected to each other;
the memory has computer instructions stored thereon; and
the processor executes the computer instructions to perform the method for the media stream transmission based on the edge device according to any of claims 1 to 5 or any of claims 6 to 9.

14. A computer-readable storage medium, having computer instructions stored thereon, wherein
the computer instructions are used for causing a computer to perform the method for the media stream transmission based on the edge device according to any of claims 1 to 5 or any of claims 6 to 9.
